# EUROPEAN PATENT SPECIFICATION

(11) **EP 3 247 951 B1**
(45) Date of publication and mention of the grant of the patent: **24.09.2025**
(21) Application number: 14908896.5
(22) Date of filing: 23.12.2014
(51) Int. Cl.: F24F 13/02, F16L 59/14, B29C 44/12, B29C 44/58, B29L 23/00, B29K 75/00

(54) **METHOD FOR FORMING AN INSULATED AIR DUCT AND AN INSULATED AIR DUCT**
VERFAHREN ZUR HERSTELLUNG EINES ISOLIERTEN LUFTKANALS UND ISOLIERTER LUFTKANAL
PROCÉDÉ DE FORMATION D'UN CONDUIT D'AIR ISOLÉ ET CONDUIT D'AIR ISOLÉ

(43) Date of publication of application: 29.11.2017
(73) Proprietor: BetterPipe Finland Oy, 85800 Haapajärvi (FI)
(72) Inventor: NISKANEN, Mikko, FI-85800 Haapajärvi (FI)
(74) Representative: Berggren Oy
(86) International application number: PCT/FI2014/051051
(87) International publication number: WO 2016/102743

(56) References cited:
- EP-A1- 1 777 244
- EP-A1- 2 248 648
- EP-A1- 2 404 733
- EP-A1- 2 404 733
- EP-A1- 2 404 733
- AT-B- 392 342
- AT-B- 392 342
- BE-A- 895 919
- BE-A- 895 919
- BE-A- 895 919
- FI-L- 20 135 700
- FI-L- 20 135 700
- US-A- 3 705 221
- US-A- 3 705 221
- US-A- 5 183 299
- US-A- 5 183 299
- US-A1- 2005 271 841
- US-A1- 2005 271 841
- US-A1- 2005 271 841
- US-A1- 2010 071 797
- US-A1- 2010 098 891
- US-A1- 2010 098 891
- US-A1- 2011 047 774

## Description

The invention relates to a method for forming an insulated air duct, the air duct comprising an inner wall, an outer wall surrounding the inner wall, and a thermal insulation layer between the inner wall and the outer wall. The invention also relates to an insulated air duct made by the method.

Air ducts of buildings are typically installed in the roof of the building, whereby they are concealed in the structures. The air ducts in the roof have to be insulated carefully so that the moisture contained in the air flowing in the ducts cannot condensate in the exhaust air vent in the winter and in the air inlet duct in the summer, in connection with cooling. The air ducts are normally insulated by insulating chutes which are installed tightly around the air ducts. Insulation of the air ducts is a separate work step which is performed after the actual building of the ducts. The material of the insulation chutes used for insulation is typically mineral wool, cellular plastic or polyester fibre.

Several drawbacks are involved in the insulation of air ducts according to the state of the art. The roof of the building is typically a shallow and narrow space, and working there is difficult. The installation of fluffy mineral wool insulation materials in such a space is difficult and requires the use of special means of protection, such as breathing masks. The insulation of the ducts is particularly difficult in buildings under renovation, in which the thermal insulation materials of the roof have already been installed. Therefore, the installation of the thermal insulation around the air ducts forms, as such, a significant part of the installation costs of the air ducts.

The insulation chutes used for installing the air ducts are tubular elements made of insulation material and having a cut extending through the wall of the element. The insulation chute is installed around the tube by slightly opening the cut so that the insulation can be slipped around the air duct. After that, adhesive tape is attached onto the outer surface of the insulation chute so that the butt joint at the cut of the chute becomes tight. In other words, the insulation is not actually fastened to the wall of the air duct, but the insulation chute is a separate element that is tightly clamped around the air duct. It has been found in practice that the tapes may come off over time, so that a gap splits open at the cut of the vent chute, decreasing the insulating capacity. Insulating chutes can also be clamped around the ducts by wires or wire nettings. This involves the risk of compressing the insulation too much, impairing its thermal insulation capacity.

A double wall air duct is known, which has a tubular inner wall and a cylindrical outer wall with a larger diameter surrounding the inner wall. The inner and outer walls consist of hot-dip zinc coated steel sheet with a thickness of 0.5 mm. A layer of glass wool is compressed between the inner and outer walls. A plastic air duct is also known which has a cellular plastic layer with a thickness of 15 mm glued onto its outer surface. Such air ducts are expensive in terms of the manufacturing costs.

Patent publication JPH06159586 discloses a tubular air duct with a layer of silicate based thermal insulation attached to its outer surface.

Document EP 2404733 A1 discloses a method for manufacturing an insulated pipe comprising an inner pipe, an insulation material inside a bag covering the inner pipe and a casing.

US 2010/071797 discloses an integrally formed, polymer-based air handling system ductwork component(s) with fire retardant properties.

The aim of the invention is to present a method for forming an insulated air duct, and an insulated air duct made by the method, which can eliminate drawbacks related to the state of the art.

The aims of the invention are achieved with the method and the air duct characterized by what will be presented in the independent claims. Some advantageous embodiments of the invention will be presented in the dependent claims.

The invention relates to a method for forming an insulated air duct. The air duct comprises an inner wall, an outer wall surrounding the inner wall, and a thermal insulation layer between the inner wall and the outer wall. A casting mould with a first opening, a second opening and a mould surface is used in the method. The mould surface refers to the inner surface of the mould, that is, the surface of the mould wall that forms the boundary surface of the space delimited by the mould. This mould surface has a cross-sectional shape that is substantially constant in the section between the first opening and the second opening. In the method, a prefabricated inner wall and a prefabricated outer wall are used, which are fitted in the casting mould in such a way that the inner wall is surrounded by the outer wall. The inner and outer walls can be fitted in the casting mould in any suitable order. For example, the outer wall can be fitted in the casting mould first, after which the inner wall is fitted inside the outer wall. Alternatively, the outer wall can be fitted around the inner wall first, after which both walls are inserted simultaneously in the casting mould. The inner and outer walls are dimensioned so that they extend from the first opening of the casting mould to the second opening of the casting mould.

After both the walls have been inserted in the casting mould, the inner wall is supported by fixing it with respect to the casting mould. The casting mould is preferably supported at its ends; in other words, at the first and second opening of the casting mould. After this, an expanding and curable foamed thermal insulation material, preferably polyurethane, is dispensed between the inner wall and the outer wall, and allowed to expand and substantially fill the whole space between the inner wall and the outer wall, and to adhere to the inner wall and the outer wall. After curing, a rigid layer of thermal insulation is provided between the inner wall and the outer wall. Finally, the insulated air duct consisting of the inner wall, the outer wall and the thermal insulation layer is removed from the casting mould.

In an advantageous embodiment of the method according to the invention, the inner wall and the outer wall are fitted in the casting mould and the foamed thermal insulation material is dispensed between the inner wall and the outer wall through the first and/or the second opening. Thus, no openings, holes or openable sections are needed at all in the section between the first and second openings on the wall of the casting mould, whereby the mould surface of the casting mould can be a solid, closed surface in the section between the first and second openings. Advantageously, the insulating air duct made by the method and consisting of the inner wall, the outer wall and the thermal insulation layer, is removed from the casting mould via the first or second opening. It has been found that the elongate insulated air duct will come out of the casting mould via the opening when the air duct is subjected to a reasonable amount of force in the longitudinal direction of the casting mould. In the removal step, the frictional force effective on the outer wall of the air duct is so small that it will not crack the outer wall or the thermal insulation layer. There is thus no need to open or disassemble the casting mould when removing the air duct, except by opening the first and second openings.

According to the invention, the outer wall is formed of a thin foil. A hose that is open at both ends is formed of this foil and fitted in the casting mould. Advantageously, the hose is dimensioned so that the perimeter of its cross section is slightly smaller than the perimeter of the cross section of the casting mould. When the foamed thermal insulation material dispensed between the inner wall and the outer wall expands, it forces the outer wall to be pressed against the mould surface of the casting mould. Thus, the outer wall of the thermally insulated air duct assumes the shape of the mould surface of the casting mould. When expanding, the hose stretches slightly against the casting mould, wherein a smooth hose surface is obtained. Preferably, the outer wall is formed of a thin metal foil, advantageously aluminium foil.

In a further advantageous embodiment of the method according to the invention, at least one strap, preferably a metal strap, is provided against the inner surface of the outer wall, extending from the first opening to the second opening. In this context, the inner surface of the outer wall refers to the surface of the outer wall facing the inner wall. By means of the straps, the outer wall can be forced against the mould surface of the casting mould, or close to it, whereby an open space is formed between the inner wall and the outer wall, for dispensing the thermal insulation material. After the curing of the thermal insulation, the strap constitutes a strip that is resistant to tensile stress in the air duct, right below the outer wall.

In an embodiment of the method not falling under the scope of the invention, the inner wall is formed of a rigid air duct, such as a metal or plastic pipe. A rigid air pipe can be easily fitted inside the casting mould and supported at its ends to be immobile inside the casting mould.

In the method according to the invention, the inner wall is made of a thin metal foil. The thickness of the foil can be some hundredth or tenth parts of a millimeter. An inner wall formed of such a foil does not have a sufficient structural rigidity as such, so that a structurally rigid central core is used to support it in the casting mould. In this embodiment, the inner wall is fitted around a separate rigid central core, and the central core is supported to be immobile inside the casting mould. After curing of the thermal insulation material, the central core is removed from inside the inner wall. The central core can be, for example, a pipe with a smooth surface, or a solid bar. The central core can be removed from the inside of the inner wall by pulling or pushing the central core out; that is, in the same way as the finished insulated air duct is removed from the casting mould. Thus, for removing the central core, it will not be necessary to break the inner or outer wall or the thermal insulation layer.

In yet another advantageous embodiment of the method according to the invention, an elongate casting mould with a cylindrical mould surface is used. The inner wall is supported to be immobile substantially in the centre of the casting mould. The length of the elongate casting mould can be, for example, about 3 metres or another suitable length.

The insulated air duct according to the invention comprises an inner wall, an outer wall enclosing the inner wall, and a thermal insulation layer between the inner wall and the outer wall. The thermal insulation layer consists of a hard, foamed thermal insulation material, preferably polyurethane, and the thermal insulation layer has an outer surface attached to the outer wall, and an inner surface attached to the inner wall. The outer wall consists of a thin foil that is shaped into a hose which is open at both ends and the inner wall consists of thin foil. Preferably, the outer wall consists of an aluminium foil. The thickness of the metal foil can be, for example, 0.1 to 0.2 mm. The thin metal foil improves the thermal insulation capacity and the mechanical strength of the thermal insulation layer but does not significantly increase the weight of the air duct.

In another advantageous embodiment of the air duct according to the invention, the inner surface of the outer wall is provided with at least one strap, preferably a metal strap, extending from the first end to the second end of the air duct. Advantageously, the inner surface of the outer wall is provided with four straps at substantially regular intervals on the perimeter of the inner surface of the outer wall. The straps constitute a strip that is resistant to traction immediately below the outer wall, to which strip pipe fittings can be fixed, for example by screw fastening, to be placed against the outer wall. The straps can thus be used for fastening air ducts to each other.

In an embodiment not falling under the scope of the invention, the inner wall is a rigid air pipe. Such an air pipe has a structural rigidity sufficient to maintain its tubular shape without external support. The rigid thermal insulation layer attached to the outer surface of the inner wall increases the overall rigidity of the air duct further. According to the invention, the inner wall consists of a thin foil. Such foil may have a thickness as small as some hundredth or tenth parts of a millimetre, whereby it does not, as such, have a structural rigidity sufficient to maintain the open, preferably tubular, shape of the inner wall. However, the inner wall is attached, by its outer surface, to the hard and structurally rigid thermal insulation layer, enabling the inner wall to maintain its open shape in use. The material of the inner wall is metal.

In yet another advantageous embodiment of the air duct according to the invention, the inner wall and the outer wall are cylindrical, in other words, they have a circular cross section. Thus, the inner wall is enclosed by a thermal insulation layer with a substantially uniform thickness. However, the inner wall and the outer wall may also have a shape deviating from the cylindrical shape, and the inner wall and the outer wall can have different cross sectional shapes.

The method according to the invention has the advantage of making the manufacture of a thermally insulated air pipe significantly simpler and faster, which reduces the manufacturing costs of the air pipe.

The thermally insulated air pipe according to the invention has the advantage that the thermal insulation capacity of the insulation layer is very good. Furthermore, the air pipe is light in weight, which facilitates the installation work. The installation work is also facilitated by the fact that the separate step of installing the thermal insulation is totally eliminated.

In the following, the invention will be described in detail. In the description, reference will be made to the appended drawings, in which
Fig. 1 shows an example of a mould device used in a method according to the invention, seen diagonally from above,
Figs. 2a to 2d show examples of different steps of the method according to the invention in a series of images,
Fig. 3a shows an example of a joint between two insulated air ducts according to the invention, in a cross-sectional view, and
Fig. 3b shows an example of a band for use in a joint of an air duct.

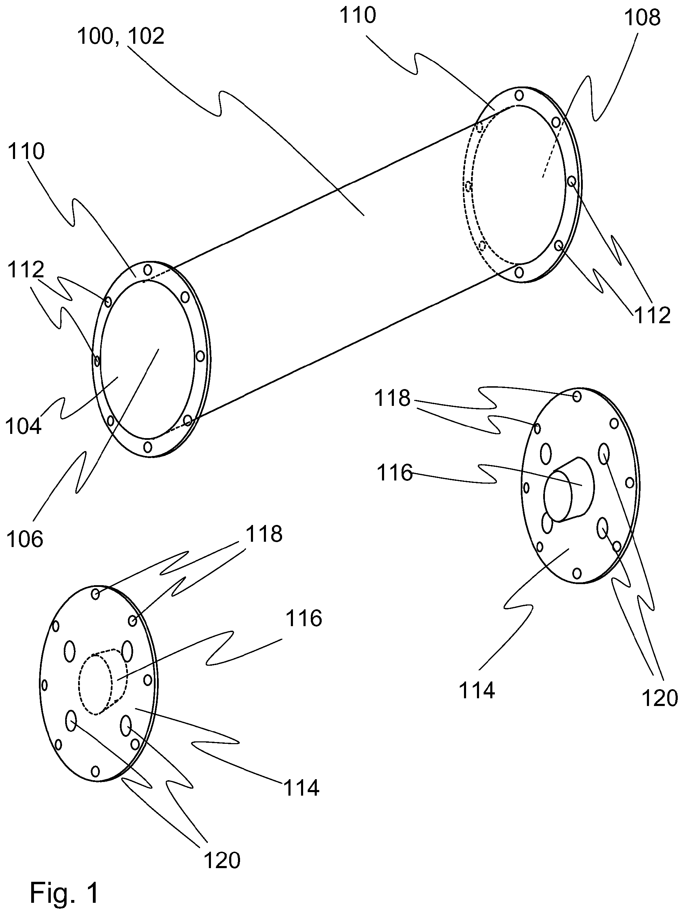

Figure 1 shows an example of a mould device used in a method according to the invention, seen diagonally from above. The mould device comprises an elongate casting mould 100 with a cylindrical wall 102. In this context, the inner surface of the wall is called the mould surface 104. The mould surface constitutes the boundary surface of the space delimited by the casting mould. The casting mould is provided with a first opening 106 at its first end and a second opening 108 at its second end. The openings are circular in shape and equal in size. The cross-section of the hollow inner part of the casting mould is circular over the whole length of the mould, and equal in size with the first and second openings. At the first and second ends, the casting mould is provided with an annular collar 100 extending outwards at a right angle to the plane of the outer surface of the casting mould and having through holes 112 for receiving mounting bolts.

Moreover, the mould device comprises two circular end plates 114 which are equal in shape and equipped with a conical supporting trunnion 116 on one surface. The supporting trunnion is fastened at its wider end to one surface of the end plate so that the imaginary central axis of the trunnion extends via the centre of the end plate. Mounting holes 118 are provided on the perimeter of the end plate, their placement matching the placement of the mounting holes in the collar 110. Furthermore, the end plates are provided with four filling holes 120 placed within an area delimited by the mounting holes, at the corner points of an imaginary square around the supporting trunnion 116. The diameter of the filling holes is preferably 22 mm.

The material of the casting mould and the end plates, as well as the supporting trunnions in the end plates, is metal, preferably steel. Casting moulds can be made in different sizes in terms of length and cross-section, for forming insulated air ducts in different sizes. Advantageously, the length of the casting mould is at least 3 metres. The diameter of the mould surface of the casting mould can be, for example, 160, 200, 185, 220, 225, or 260 mm. The size of the end plates 114 is determined by the size of the opening 106, 108 of the casting mould. The diameter of the supporting trunnion 116 on the end plates is dimensioned so that its butt end, that is, its widest end, is about 0.5 mm smaller than the diameter of the inner wall of the insulated air pipe. Thus, the largest diameter of the supporting trunnion can be, for example, 99.5, 124.5, 159.5, or 199.9 mm.

In the description above, the end plate 114 that forms part of the mould device, is fastened to the fixing flange at the end of the casting mould by means of mounting bolts. Alternatively, the fastening of the end plate can be implemented by hinging one border of the end plate onto the end of the casting mould and by providing the end plate with a quick-release fastener, by means of which the end plate can be locked onto the casting mould. In this case, the end plates are not provided with any fixing holes. Furthermore, instead of four filling holes, the end plates can be provided with another number of filling holes. Preferably, there is only one filling hole, and in the first end plate only. In this case, the second end plate is provided with air holes which are smaller in size than the filling hole and through which air can escape the casting mould. Advantageously, two air holes are provided, having a diameter of 5 mm.

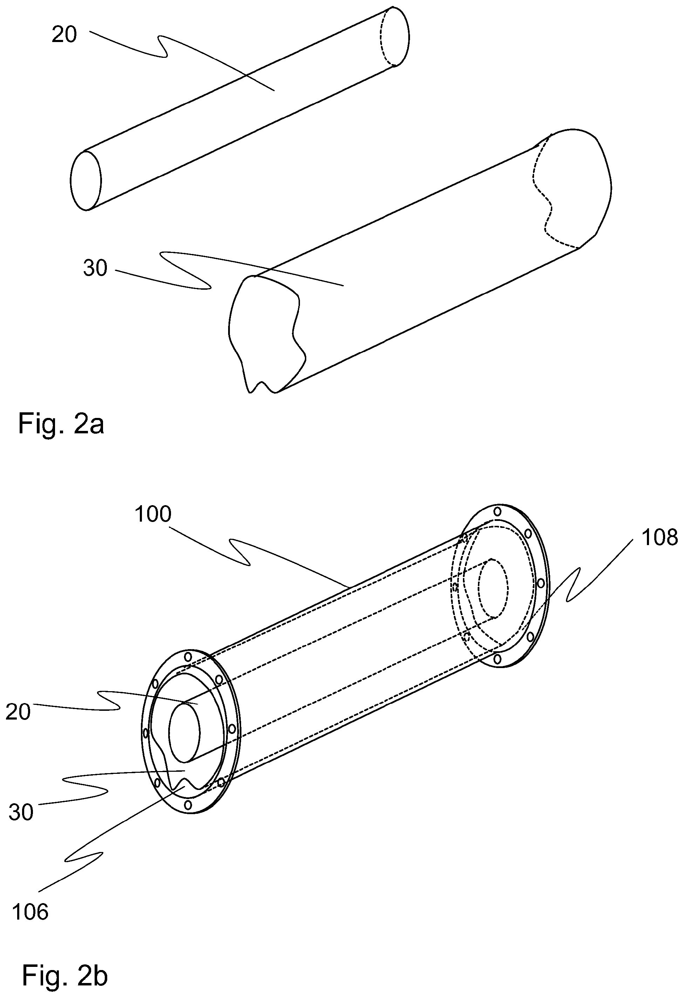

Figures 2a to 2d illustrate steps of a method for manufacturing an insulated air pipe according to the invention in a series of images. The mould device shown in Fig. 1 is applied in the method. An insulated air duct to be made by the method comprises an inner wall 20 and an outer wall 30. In the method, a prefabricated metal air duct, a so-called spiral-weld pipe, is used as the inner wall, and the outer wall is formed of a thin aluminium foil. A hose that is open at both ends is formed of the aluminium foil (Fig. 2a). The hose is dimensioned so that the perimeter of its cross section is slightly smaller than the perimeter of the cross section of the mould surface 104 of the casting mould 100. The length of the hose-like outer wall is selected to be slightly greater than the length of the casting mould, that is, the distance between the first and second openings of the casting mould.

The outer wall 30 is fitted in the casting mould via the first or the second opening 106, 108, and the first end of the outer wall is fastened to the brim of the first opening of the casting mould, and the second end of the outer wall is fastened to the brim of the second opening of the casting mould. After this, the rigid metal inner wall 20 is fitted inside the outer wall. Alternatively, the outer wall can be fitted around the inner wall first, after which both walls are inserted in the casting mould simultaneously. It is also possible to fit the inner wall inside the casting mould first and then to "pull" the outer wall onto the inner wall. The inner wall is also dimensioned to be substantially equal in length with the casting mould 100 (Fig. 2b).

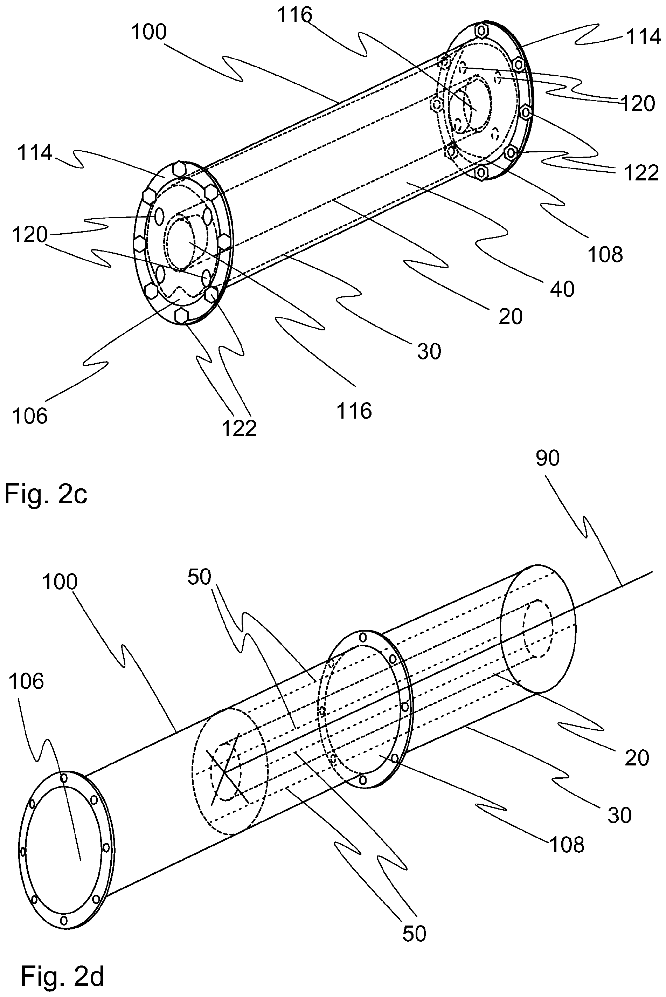

After fitting the inner wall 20 in the casting mould 100, it is supported to be immobile with respect to the casting mould. The inner wall is supported by fitting the end plates 114 against the first and the second openings 106, 108 of the casting mould 100 in such a way that the supporting trunnions 116 are placed inside the ends of the inner wall. The end plates are fastened to the casting mould by quick-release fasteners or mounting nuts 122 which are fitted to extend through the mounting holes in the collar and the mounting holes in the rim of the end plate. In this way, the inner wall is supported at both ends to the supporting trunnion 116 which prevents the inner wall from moving with respect to the casting mould (Fig. 2c). The filling holes 120 in the end plates will now open to the space between the inner wall and the outer wall.

Next, polyurethane is dispensed via the filling hole or filling holes 120 in the end plate 114 into the space between the inner wall and the outer wall, and is allowed to expand and to substantially fill up the space between the inner wall 20 and the outer wall 30. When the foamed polyurethane dispensed between the inner wall and the outer wall expands, it forces the outer wall 30 to be pressed against the mould surface of the casting mould 100. Thus, the outer wall 30 of the thermally insulated air duct assumes the shape of the mould surface of the casting mould. The expanded polyurethane adheres to the inner wall and the outer wall, and excess polyurethane can escape the casting mould via the filling holes or the air holes. The polyurethane is allowed to cure for a suitable length of time. After the curing, a rigid layer of thermal insulation 40 is provided between the inner wall and the outer wall.

Finally, the insulated air duct consisting of the inner wall, the outer wall and the thermal insulation layer is removed from the casting mould 100. For removing the air duct, the end plates are first removed from the front of the openings 106, 108. After that, the insulated air duct is simply pulled and/or pushed out of the casting mould 100, either via the first opening 106 or via the second opening 108. For pushing out, a rod or a bar can be used, which is inserted in the first opening of the casting mould, whereby it will push out the air duct from the second opening. For pulling out, it is possible to use a rope 90 or a wire that is passed through the pipe delimited by the inner wall 20 of the air duct and anchored at its first end to the first end of the inner wall. The air duct can thus be removed from the casting mould by pulling at the second end of the rope 90 (Fig. 2d).

In an advantageous embodiment of the method according to the invention, four narrow metal straps 50 are provided against the inner surface of the outer wall 30 of the air duct (Fig. 2d), extending from the first opening 106 of the casting mould to the second opening 108 of the casting mould. The straps are placed at substantially regular intervals at quarter points of the perimeter of the inner surface of the outer wall. The straps are pulled tight, and their both ends are squeezed between the end plate 114 and the collar 110 of the casting mould. The straps are placed in the casting mould before the dispensing of the thermal insulation material. By means of the tight straps, the outer wall can be pressed against the mould surface of the casting mould, or close to it, so that an open space is formed between the inner wall 20 and the outer wall 30, for dispensing the thermal insulation material. After the curing of the thermal insulation, the strap constitutes in the air duct, immediately below the outer wall, a strip, that is resistant to tensile stress. The strap is adhered over its whole length to the thermal insulation layer, so that it will remain stable between the outer wall and the outer surface of the thermal insulation layer. It is obvious that the number of straps can naturally be different from four, for example 1, 2, 3, 5, or 6.

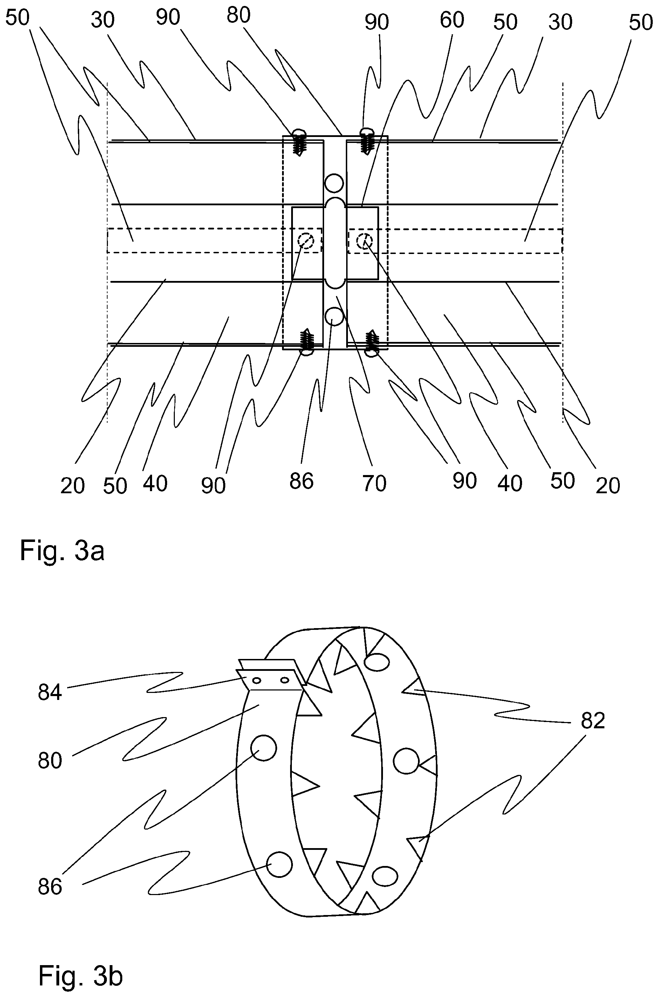

Figure 3a shows an exemplary cross-sectional view of a joint between two thermally insulated air ducts according to the invention, and Fig. 3b shows a band 80 used in the joint. A conventional tubular sleeve joint piece 60 is mounted in the joint, its first end being fitted inside the inner wall of the first air duct and its second end being fitted inside the inner wall of the second air duct. In the joint, the ends of the air ducts to be connected are pressed as close to each other as possible, whereby a gap of about 10 mm is left between the end faces of their insulation layers

The gap formed in the joint is covered by an annular band 80 (Fig. 3b) whose first rim extends onto the outer wall of the first air duct and whose second rim extends onto the outer wall of the second air duct. Thus, the band covers the whole gap left under it. The band is made of thin, bendable sheet metal. Both rims of the strap are provided with triangular spikes 82 extending inwards from the plane of the band (Fig. 3b) and penetrating into the thermal insulation layer 40 when the strap is installed. The spikes are used as locking elements to prevent the air ducts from being pulled apart. Each end of the band is provided with an end part 84 bending at a right angle. Each end part is provided with two holes which are aligned with the respective holes in the opposite end part of the band. The end parts are fastened to each other and the band is tightened by screws or bolts to be driven in the locking holes. The locking holes can be provided with inner threads. Moreover, the wall of the band is provided with evenly spaced through holes 86, via which joint sealing foam 70 can be extruded into the gap covered by the band. Excess joint sealing foam extruded in the gap will exit the gap through the holes. If metal straps 50 are provided under the outer wall 30 in the air ducts to be connected, the band 80 can be fastened at its rims to the ends of the straps by screws 90. Fastening the straps at their ends to the band will significantly increase the tensile and bending strength of the joint.

Some advantageous embodiments of the method and the air duct according to the invention have been described above. The invention is not limited to the solutions described above, but the inventive idea can be applied in different ways within the scope of the claims.

## Claims

1. A method for forming an insulated air duct, which air duct comprises an inner wall (20), an outer wall (30) surrounding the inner wall, and a thermal insulation layer (40) between the inner wall and the outer wall, the method comprising
- providing a casting mould (100) with a first opening (106), a second opening (108), and a mould surface (104), the mould surface having a cross sectional shape that is substantially constant in the section between the first opening and the second opening,
- fitting the inner wall (20) and the outer wall (30) inside the casting mould (100) in such a way that the inner wall is surrounded by the outer wall, and the inner and outer walls extend from the first opening (106) of the casting mould (100) to the second opening (108) of the casting mould,
- supporting the inner wall (20) to be immobile with respect to the casting mould (100),
- dispensing expandable and curable foamed thermal insulation material into the space between the inner wall (20) and the outer wall (30),
- allowing the thermal insulation material to expand and substantially fill up the space between the inner wall (20) and the outer wall (30), to adhere to the inner wall and the outer wall, and to cure into a rigid thermal insulation layer (40),
- removing the insulated air duct consisting of the inner wall (20), the outer wall (30) and the thermal insulation layer (40), from the casting mould (100) and
- forming the outer wall (30) of a thin foil that is shaped into a hose which is open at both ends and fitting said hose inside the casting mould (100),
**characterized in**
- forming the inner wall (20) of thin metal foil,
- fitting the inner wall (20) around a separate rigid central core,
- supporting the central core to be immobile in the casting mould (100), and
- removing the central core from the inside of the inner wall (20) after the curing of the thermal insulation material.

2. The method according to claim 1, **characterized in** fitting the inner wall (20) and the outer wall (30) in the casting mould (100) and dispensing the foamed thermal insulation material into the space between the inner wall (20) and the outer wall (30) via the first and/or the second opening (106, 108).

3. The method according to claim 1 or 2, **characterized in** removing the insulated air duct consisting of the inner wall (20), the outer wall (30) and the thermal insulation layer (40), from the casting mould (100) via the first or the second opening (106, 108).

4. The method according to any of the claims 1 to 3, **characterized in that** forming the cross-sectional perimeter of the outer wall (30) slightly smaller than the cross-sectional perimeter of the casting mould (100).

5. The method according to any of the claims 1 to 4, **characterized in** forming the outer wall (30) of a thin aluminium foil.

6. The method according to any of the claims 1 to 5, **characterized in** providing at least one strap (50), preferably a metal strap, against the inner surface of the outer wall (30), the strap (50) extending from the first opening (106) to the second opening (108).

7. The method according to any of the claims 1 to 6, **characterized in that** polyurethane is dispensed between the inner wall (20) and the outer wall (30).

8. The method according to any of the claims 1 to 7, **characterized in** using an elongate casting mould (100) with a cylindrical mould surface (104), and supporting the inner wall (20) to be immobile substantially in the centre of the casting mould.

9. An insulated air duct with an inner wall (20), an outer wall (30) surrounding the inner wall, and a thermal insulation layer (40) between the inner wall and the outer wall, which thermal insulation layer (40) consists of a hard, foamed thermal insulation material, and that the thermal insulation layer has an outer surface attached to the outer wall (30) and an inner surface attached to the inner wall (20) and the outer wall (30) consists of a thin foil that is shaped into a hose which is open at both ends, **characterized in that** the inner wall (20) consists of thin metal foil.

10. The air duct according to claim 9, **characterized in that** the outer wall (30) consists of aluminium foil.

11. The air duct according to claim 9 or 10, **characterized in that** the inner surface of the outer wall (30) is provided with at least one strap (50), preferably a metal strap, extending from the first end to the second end of the air duct.

12. The air duct according to any of the claims 9 to 11, **characterized in that** the inner surface of the outer wall (30) is provided with four straps (50) which are substantially evenly spaced on the perimeter of the inner surface of the outer wall (30).

13. The air duct according to any of the claims 9 to 12, **characterized in that** the material of the inner wall (20) is plastic or metal.

14. The air duct according to any of the claims 9 to 13, **characterized in that** the material of the thermal insulation layer (40) is polyurethane.

15. The air duct according to any of the claims 9 to 14, **characterized in that** the inner wall (20) and the outer wall (30) are cylindrical.

## Patentansprüche

1. Verfahren zur Bildung eines isolierten Luftkanals, wobei der Luftkanal eine Innenwand (20), eine die Innenwand umgebende Außenwand (30) und eine Wärmedämmschicht (40) zwischen der Innenwand und der Außenwand umfasst, das Verfahren umfassend:
- Bereitstellen einer Gießform (100) mit einer ersten Öffnung (106), einer zweiten Öffnung (108) und einer Formoberfläche (104), wobei die Formoberfläche eine Querschnittsform aufweist, die in dem Abschnitt zwischen der ersten Öffnung und der zweiten Öffnung im Wesentlichen konstant ist,
- Einsetzen der Innenwand (20) und der Außenwand (30) in die Gießform (100) in einer Art und Weise, dass die Innenwand von der Außenwand umgeben ist und die Innen-und Außenwände sich von der ersten Öffnung (106) der Gießform (100) zur zweiten Öffnung (108) der Gießform erstrecken,
- Stützen der Innenwand (20), damit sie in Bezug auf die Gießform (100) unbeweglich ist,
- Abgeben von expandierbarem und aushärtbarem geschäumtem Wärmedämmmaterial in den Raum zwischen der Innenwand (20) und der Außenwand (30),
- Ermöglichen, dass sich das Wärmedämmmaterial ausdehnt und den Raum zwischen der Innenwand (20) und der Außenwand (30) im Wesentlichen ausfüllt, an der Innenwand und der Außenwand haftet und zu einer starren Wärmedämmschicht (40) aushärtet,
- Entnehmen des isolierten Luftkanals, bestehend aus der Innenwand (20), der Außenwand (30) und der Wärmedämmschicht (40), aus der Gießform (100) und
- Bilden der Außenwand (30) aus einer dünnen Folie, die zu einem an beiden Enden offenen Schlauch geformt ist, und Einsetzen des Schlauchs in die Gießform (100),
**gekennzeichnet durch**
- Bilden der Innenwand (20) aus dünner Metallfolie,
- Anbringen der Innenwand (20) um einen separaten starren Kern herum,
- Stützen des zentralen Kerns, um in der Gießform (100) unbeweglich zu sein, und
- Entfernen des zentralen Kerns von der Innenseite der Innenwand (20) nach dem Aushärten des Wärmedämmmaterials.

2. Verfahren nach Anspruch 1, **dadurch gekennzeichnet, dass** die Innenwand (20) und die Außenwand (30) in die Gießform (100) eingesetzt werden und das geschäumte Wärmedämmmaterial über die erste und/oder die zweite Öffnung (106, 108) in den Raum zwischen der Innenwand (20) und der Außenwand (30) eingebracht wird.

3. Verfahren nach Anspruch 1 oder 2, **dadurch gekennzeichnet, dass** der isolierte Luftkanal, bestehend aus der Innenwand (20), der Außenwand (30) und der Wärmedämmschicht (40), über die erste oder die zweite Öffnung (106, 108) aus der Gießform (100) entfernt wird.

4. Verfahren nach einem der Ansprüche 1 bis 3, **dadurch gekennzeichnet, dass** das Bilden des Querschnittsumfangs der Außenwand (30) etwas kleiner als der Querschnittsumfang der Gießform (100) ist.

5. Verfahren nach einem der Ansprüche 1 bis 4, **dadurch gekennzeichnet, dass** die Außenwand (30) aus einer dünnen Aluminiumfolie gebildet wird.

6. Verfahren nach einem der Ansprüche 1 bis 5, **dadurch gekennzeichnet, dass** mindestens ein Band (50), vorzugsweise ein Metallband, an der inneren Oberfläche der Außenwand (30) bereitgestellt wird, wobei sich das Band (50) von der ersten Öffnung (106) zur zweiten Öffnung (108) erstreckt.

7. Verfahren nach einem der Ansprüche 1 bis 6, **dadurch gekennzeichnet, dass** das Polyurethan zwischen der Innenwand (20) und der Außenwand (30) aufgetragen wird.

8. Verfahren nach einem der Ansprüche 1 bis 7, **dadurch gekennzeichnet, dass** eine längliche Gießform (100) mit einer zylindrischen Formoberfläche (104) verwendet wird und die Innenwand (20) im Wesentlichen in der Mitte der Gießform unbeweglich gestützt wird.

9. Isolierter Luftkanal mit einer Innenwand (20), einer die Innenwand umgebenden Außenwand (30) und einer Wärmedämmschicht (40) zwischen der Innenwand und der Außenwand, wobei die Wärmedämmschicht (40) aus einem harten, geschäumten Wärmedämmaterial besteht und die Wärmedämmschicht eine an der Außenwand (30) befestigte Außenoberfläche und eine an der Innenwand (20) befestigte Innenoberfläche aufweist und die Außenwand (30) aus einer dünnen Folie besteht, die zu einem an beiden Enden offenen Schlauch geformt ist, **dadurch gekennzeichnet, dass** die Innenwand (20) aus dünner Metallfolie besteht.

10. Luftkanal nach Anspruch 9, **dadurch gekennzeichnet, dass** die Außenwand (30) aus Aluminiumfolie besteht.

11. Luftkanal nach Anspruch 9 oder 10, **dadurch gekennzeichnet, dass** die innere Oberfläche der Außenwand (30) mit mindestens einem Band (50), vorzugsweise einem Metallband, bereitgestellt ist, das sich vom ersten Ende zum zweiten Ende des Luftkanals erstreckt.

12. Luftkanal nach einem der Ansprüche 9 bis 11, **dadurch gekennzeichnet, dass** die innere Oberfläche der Außenwand (30) mit vier Bändern (50) versehen ist, die im Wesentlichen gleichmäßig auf dem Umfang der inneren Oberfläche der Außenwand (30) verteilt sind.

13. Luftkanal nach einem der Ansprüche 9 bis 12, **dadurch gekennzeichnet, dass** das Material der Innenwand (20) Kunststoff oder Metall ist.

14. Luftkanal nach einem der Ansprüche 9 bis 13, **dadurch gekennzeichnet, dass** das Material der Wärmedämmschicht (40) Polyurethan ist.

15. Luftkanal nach einem der Ansprüche 9 bis 14, **dadurch gekennzeichnet, dass** die Innenwand (20) und die Außenwand (30) zylindrisch sind.

## Revendications

1. Procédé de formation d'un conduit d'air isolé, lequel conduit d'air comprend une paroi intérieure (20), une paroi extérieure (30) entourant la paroi intérieure, et une couche d'isolation thermique (40) entre la paroi intérieure et la paroi extérieure, le procédé comprenant
- la fourniture d'un moule de coulée (100), comportant une première ouverture (106), une seconde ouverture (108) et une surface de moule (104), la surface de moule ayant une forme en coupe transversale qui est sensiblement constante dans la section entre la première ouverture et la seconde ouverture,
- le montage de la paroi intérieure (20) et de la paroi extérieure (30) à l'intérieur du moule de coulée (100) de sorte que la paroi intérieure est entourée par la paroi extérieure, et que les parois intérieure et extérieure s'étendent de la première ouverture (106) du moule de coulée (100) à la seconde ouverture (108) du moule de coulée,
- le soutien de la paroi intérieure (20) de manière à ce qu'elle soit immobile par rapport au moule de coulée (100),
- la distribution d'un matériau d'isolation thermique en mousse expansible et durcissable dans l'espace entre la paroi intérieure (20) et la paroi extérieure (30),
- le fait de permettre au matériau d'isolation thermique de se dilater et de remplir sensiblement l'espace entre la paroi intérieure (20) et la paroi extérieure (30), d'adhérer à la paroi intérieure et à la paroi extérieure, et de durcir en une couche d'isolation thermique rigide (40),
- le retrait du conduit d'air isolé constitué de la paroi intérieure (20), de la paroi extérieure (30) et de la couche d'isolation thermique (40), du moule de coulée (100), et
- la formation de la paroi extérieure (30) d'une feuille mince qui est façonnée en un tuyau qui est ouvert aux deux extrémités et l'insertion dudit tuyau à l'intérieur du moule de coulée (100),
**caractérisé par**
- la formation de la paroi intérieure (20) d'une feuille métallique mince,
- le montage de la paroi intérieure (20) autour d'un noyau central rigide séparé,
- le soutien du noyau central pour qu'il soit immobile dans le moule de coulée (100), et
- le retrait du noyau central de l'intérieur de la paroi intérieure (20) après le durcissement du matériau d'isolation thermique.

2. Procédé selon la revendication 1, **caractérisé par** le montage de la paroi intérieure (20) et de la paroi extérieure (30) dans le moule de coulée (100) et par la distribution du matériau d'isolation thermique en mousse dans l'espace entre la paroi intérieure (20) et la paroi extérieure (30) par la première et/ou la seconde ouverture (106, 108).

3. Procédé selon la revendication 1 ou 2, **caractérisé par** le retrait du conduit d'air isolé constitué de la paroi intérieure (20), de la paroi extérieure (30) et de la couche d'isolation thermique (40), du moule de coulée (100), par la première ou la seconde ouverture (106, 108).

4. Procédé selon l'une quelconque des revendications 1 à 3, **caractérisé en ce que** le périmètre de la section transversale de la paroi extérieure (30) est formé de manière à être légèrement plus petit que le périmètre de la section transversale du moule de coulée (100).

5. Procédé selon l'une quelconque des revendications 1 à 4, **caractérisé par** la formation de la paroi extérieure (30) à partir d'une fine feuille d'aluminium.

6. Procédé selon l'une quelconque des revendications 1 à 5, **caractérisé par** la fourniture d'au moins une sangle (50), de préférence une sangle métallique, contre la surface intérieure de la paroi extérieure (30), la sangle (50) s'étendant de la première ouverture (106) à la seconde ouverture (108).

7. Procédé selon l'une quelconque des revendications 1 à 6, **caractérisé en ce que** du polyuréthane est distribué entre la paroi intérieure (20) et la paroi extérieure (30).

8. Procédé selon l'une quelconque des revendications 1 à 7, **caractérisé par** l'utilisation d'un moule de coulée (100) allongé avec une surface de moule cylindrique (104), et par le soutien de la paroi intérieure (20) de manière à ce qu'elle soit immobile sensiblement au centre du moule de coulée.

9. Conduit d'air isolé, comportant une paroi intérieure (20), une paroi extérieure (30) entourant la paroi intérieure, et une couche d'isolation thermique (40) entre la paroi intérieure et la paroi extérieure, laquelle couche d'isolation thermique (40) est constituée d'un matériau d'isolation thermique en mousse dure, et laquelle couche d'isolation thermique a une surface extérieure fixée à la paroi extérieure (30) et une surface intérieure fixée à la paroi intérieure (20) et la paroi extérieure (30) est constituée d'une feuille mince qui est façonnée en un tuyau qui est ouvert aux deux extrémités, **caractérisé en ce que** la paroi intérieure (20) est constituée d'une feuille métallique mince.

10. Conduit d'air selon la revendication 9, **caractérisé en ce que** la paroi extérieure (30) est constituée d'une feuille d'aluminium.

11. Conduit d'air selon la revendication 9 ou 10, **caractérisé en ce que** la surface intérieure de la paroi extérieure (30) est pourvue d'au moins une sangle (50), de préférence une sangle métallique, s'étendant de la première extrémité à la seconde extrémité du conduit d'air.

12. Conduit d'air selon l'une quelconque des revendications 9 à 11, **caractérisé en ce que** la surface intérieure de la paroi extérieure (30) est pourvue de quatre sangles (50) qui sont espacées sensiblement de manière uniforme sur le périmètre de la surface intérieure de la paroi extérieure (30).

13. Conduit d'air selon l'une quelconque des revendications 9 à 12, **caractérisé en ce que** le matériau de la paroi intérieure (20) est du plastique ou du métal.

14. Conduit d'air selon l'une quelconque des revendications 9 à 13, **caractérisé en ce que** le matériau de la couche d'isolation thermique (40) est du polyuréthane.

15. Conduit d'air selon l'une quelconque des revendications 9 à 14, **caractérisé en ce que** la paroi intérieure (20) et la paroi extérieure (30) sont cylindriques.
